Europäisches Patentamt

European Patent Office

Office européen des brevets

(19)

(11) **EP 1 584 170 B1**

(12) **EUROPÄISCHE PATENTSCHRIFT**

(45) Veröffentlichungstag und Bekanntmachung des Hinweises auf die Patenterteilung:
**19.07.2006 Patentblatt 2006/29**

(21) Anmeldenummer: **03808246.7**

(22) Anmeldetag: **23.12.2003**

(51) Int Cl.:
**H04L 27/156** (2006.01)

(86) Internationale Anmeldenummer:
**PCT/DE2003/004278**

(87) Internationale Veröffentlichungsnummer:
**WO 2004/066577 (05.08.2004 Gazette 2004/32)**

(54) **WANDLERSCHALTUNG FÜR EINE LIMITER-EMPFÄNGERSTRUKTUR UND VERFAHEN ZUR SIGNALWANDLUNG IN EINER LIMITER-EMPFÄNGERSTRUKTUR**

CONVERTER CIRCUIT FOR A LIMITER RECEIVER STRUCTURE AND METHOD FOR CONVERTING A SIGNAL IN A LIMITER RECEIVER STRUCTURE

CIRCUIT DE CONVERTISSEUR POUR STRUCTURE DE RECEPTEUR LIMITEUR ET PROCEDE POUR CONVERTIR UN SIGNAL DANS UNE STRUCTURE DE RECEPTEUR LIMITEUR

(84) Benannte Vertragsstaaten:
**DE**

(30) Priorität: **13.01.2003 DE 10300938**

(43) Veröffentlichungstag der Anmeldung:
**12.10.2005 Patentblatt 2005/41**

(73) Patentinhaber: **Infineon Technologies AG
81669 München (DE)**

(72) Erfinder:
• **FELBECKER, Britta
81549 München (DE)**
• **HAMMES, Markus
46539 Dinslaken (DE)**
• **SPETH, Michael
40239 Düsseldorf (DE)**

(74) Vertreter: **Patentanwälte Lambsdorff & Lange
Dingolfinger Strasse 6
81673 München (DE)**

(56) Entgegenhaltungen:
**US-A- 5 329 242**

• **ISMAILOGLU N ET AL: "LOW-POWER DESIGN OF A DIGITAL FM DEMODULATOR BASED ON ZERO-CROSS DETECTION AT IF" VTC 1999-FALL. IEEE VTS 50TH. VEHICULAR TECHNOLOGY CONFERENCE. GATEWAY TO THE 21ST. CENTURY COMMUNICATIONS VILLAGE. AMSTERDAM, SEPT. 19 - 22, 1999, IEEE VEHICULAR TECHNOLGY CONFERENCE, NEW YORK, NY : IEEE, US, Bd. VOL. 2 CONF. 50, September 1999 (1999-09), Seiten 810-813, XP000924622 ISBN: 0-7803-5436-2 in der Anmeldung erwähnt**

EP 1 584 170 B1

**Beschreibung**

Die Erfindung betrifft eine Wandlerschaltung zur Verarbeitung eines analogen frequenz- oder phasenmodulierten Empfangssignals für eine Limiter-Empfängerstruktur und ein Verfahren zur Signalwandlung eines analogen frequenz- oder phasenmodulierten Empfangssignals in einer Limiter-Empfängerstruktur.

Zur aufwandsgünstigen Implementierung von Empfängern für frequenz- oder phasenmodulierte Signale mit konstanter Einhüllenden wie beispielsweise GFSK (Gaussian Frequency Shift Keying) Signalen werden sogenannte Limiter-Empfängerstrukturen eingesetzt. Das Funktionsprinzip einer Limiter-Empfängerstruktur beruht darauf, dass der wesentliche Anteil der Information eines frequenz- oder phasenmodulierten Signals in der Frequenz bzw. der Phase und damit in den Nulldurchgängen des Signals liegt. Die Analog-zu-Digital-Wandlung des Empfangssignals erfolgt in einer Limiter-Empfängerstruktur durch eine Schwellenwertentscheidung (welche durch den Limiter vorgenommen wird) und eine nachfolgende Abtastung des von dem Limiter ausgegebenen wertediskreten, zeitkontinuierlichen Rechtecksignals. Da im Signalweg hinter dem Limiter die gesamte Nutzinformation des Signals in den Nulldurchgängen liegt, ist eine hohe Abtastrate $T_z^{-1}$ erforderlich, um die Nulldurchgänge mit der notwendigen Genauigkeit zu erfassen. Um bei der Abtastung spektrale Überlappungen (Aliasing) höherer harmonischer Spektralanteile und somit Auslöschung von Information zu vermeiden, muss die Abtastrate $T_z^{-1}$ deutlich größer als die Bandbreite B des von dem Limiter entgegengenommenen Signals gewählt werden. Mit anderen Worten ist die aus informationstheoretischer Sicht erforderliche Mindestabtastrate (welche durch die Bandbreite B des von dem Limiter entgegengenommenen Signals bestimmt ist) erheblich geringer als die verwendete Abtastrate $T_z^{-1}$.

Anschließend werden aus dem durch die Abtastung erzeugten digitalen Signal durch mehrere Filterstufen die höheren harmonischen Anteile des Signals beseitigt, die Signalrate dezimiert und durch eine Demodulation ein digitales Signal erzeugt, welches dem GSFK-Signal äquivalent ist. Die Beseitigung der höheren harmonischen Anteile des Signals muss mit der hohen Abtastrate $T_z^{-1}$ erfolgen und stellt hohe Anforderungen an die im Signalweg hinter der Abtastung verwendeten Filter. In der Praxis werden für die Signalrekonstruktion aufwändige Filterkaskaden mit zwischengeschalteten Dezimationsstufen eingesetzt werden. Aufgrund der hohen Abtastrate $T_z^{-1}$ tritt ein hoher Leistungsverbrauch auf.

In dem Artikel "Low-Power Design of a Digital FM Demodulator Based on Zero-Cross Detection at IF", N. Ismailoglu et al., IEEE Vehicular Technology Conference, 19. - 22. September 1999, Seiten 810 bis 813, ist eine Limiter-Diskriminatorschaltung bekannt, in welcher im Signalweg hinter der Abtastung ein digitaler Nulldurchgangsdetektor angeordnet ist. Der Nulldurchgangsdetektor erzeugt ein Signal, welches die Zeitpunkte der Nulldurchgänge des von dem Limiter ausgegebenen Signals durch Erzeugung einer logischen "1" angibt. Zur Demodulation des von dem Nulldurchgangsdetektor ausgegebenen Signals wird ein Sinc-Cube Dezimationsfilter vierter Ordnung und eine anschließende Erniedrigung der Abtastrate um den Faktor 4 eingesetzt.

Aus der Patentschrift US 5329242 ist eine Limiter-Schaltung zur Demodulation eines frequenzmodulierten Signals mittels des Messens der zeitlichen Abstände zwischen Nulldurchgängen des empfangenen Signals bekannt.

Der Erfindung liegt die Aufgabe zugrunde, eine Wandlerschaltung zur Verarbeitung eines analogen frequenz- oder phasenmodulierten Empfangssignals für eine Limiter-Empfängerstruktur zu schaffen, welche eine Demodulation des gewandelten Signals unter Verwendung von einfacheren Filterstrukturen ermöglicht. Ferner zielt die Erfindung darauf ab, ein Verfahren zur Verarbeitung eines analogen frequenz- oder phasenmodulierten Empfangssignals in einer Limiter-Empfängerstruktur anzugeben, mit welchem ein aufwandsgünstig demodulierbares Verarbei-tungssignal generierbar ist. Insbesondere soll darüber hinaus ein niedriger Leistungsverbrauch in der Wandlerschaltung und nachfolgenden Schaltungsabschnitten (Demodulator) erzielbar sein.

Die der Erfindung zugrunde liegende Aufgabenstellung wird durch die Merkmale der unabhängigen Ansprüche gelöst.

Die erfindungsgemäße Wandlerschaltung umfasst entsprechend der üblichen Bauweise einen Limiter, welcher ein analoges Empfangssignal in ein zeitkontinuierliches, wertediskretes Limiter-Signal bestehend aus einer Folge von Rechteckpulsen umsetzt. Dem Limiter ist eine Auswerteschaltung nachgeschaltet, welche die zeitlichen Abstände zwischen jeweils zwei aufeinanderfolgenden Nulldurchgängen des Limiter-Signals erfasst und ein Nulldurchgangs-Abstandssignal ausgibt. Ferner umfasst die Wandlerschaltung eine Signalsynthese-Schaltung, welche das Nulldurchgangs-Abstandssignal entgegennimmt und in Abhängigkeit von diesem ein werte- und zeitdiskretes Verarbeitungssignal für die Signaldemodulation erzeugt, dessen Nulldurchgänge den Nulldurchgängen des Limiter-Signals entsprechen und dessen für die Signalsynthese eingesetze Pulsform eine geringere Spektralbreite als ein Rechteckpuls entsprechender Breite aufweist.

Durch die Signalsynthese-Schaltung wird erreicht, dass anstelle der implizit durch den Limiter vorgegebenen Rechteckpulse für die Signalverarbeitung hinter der Wandlerschaltung Pulse mit einer Signalform eingesetzt werden, welche eine geringere Spektralbreite als Rechteckpulse aufweisen. Infolge der besseren Spektralcharakteristik sinken die Anforderungen an die nachgeordneten Filtereinheiten und somit auch deren Komplexität.

Prinzipiell kann die bei der Signalsynthese verwendete Pulsform optimal entsprechend der im Signalweg folgenden Nachverarbeitung hinter der Wandlerschaltung gewählt werden. Eine besonders bevorzugte Ausgestaltung der Erfindung kennzeichnet sich jedoch dadurch, dass die Signalsynthese-Schaltung als Pulsform einen Dreieckpuls verwendet. Ein Dreieckpuls weist eine wesentlich besser Spektralcharakteristik als ein Rechteckpuls auf, so dass mit dieser Wahl ein großer Komplexitätsgewinn bei den nachfolgenden Einheiten (Filtern) erzielt werden kann. Ein weiterer Vorteil der Verwendung eines Dreieckpulses besteht darin, dass die Signalwerte des Dreieckpulses mittels einfacher linearer Operationen berechenbar sind.

Eine weitere vorteilhafte Ausgestaltung der Erfindung kennzeichnet sich dadurch, dass die zeitlichen Abstände zwischen jeweils zwei aufeinander folgenden Nulldurchgängen des Limiter-Signals mit einer Zeitgenauigkeit $T_Z$ erfasst werden, und dass das Verarbeitungssignal eine Abtastrate $T_S^{-1}$ aufweist, die kleiner als $T_Z^{-1}$ ist. Dies erlaubt es, bereits innerhalb der Wandlerschaltung (genauer: nach der Bestimmung der Nulldurchgänge) wie auch hinter der Wandlerschaltung die Basisband-Signalverarbeitung (Filterung einschließlich Demodulation) mit einer wesentlich niedrigeren Abtastrate $T_S^{-1}$ vorzunehmen. Durch diese Maßnahme wird eine deutliche Reduzierung des Leistungsverbrauchs erreicht.

Eine weitere vorteilhafte Ausgestaltung der Erfindung kennzeichnet sich dadurch, dass die Auswerteschaltung einen Nulldurchgangsdetektor und einen dem Nulldurchgangsdetektor nachgeordneten Zähler umfasst. Dabei muss lediglich der Zähler mit der (hohen) Abtastrate $T_Z^{-1}$ betrieben werden. Die Pulserzeugung in der Signal-Syntheseschaltung kann bereits energiesparend auf der durch die reduzierte Abtastrate $T_S^{-1}$ gegebenen Zeitbasis erfolgen. Zu diesem Zweck umfasst die Signalsynthese-Schaltung vorzugsweise einen Interpolator, welcher in Abhängigkeit von dem Nulldurchgangs-Abstandssignal das Verarbeitungssignal an den durch die Abtastrate $T_S^{-1}$ bestimmten Stützstellen unter Verwendung der vorgegebenen Pulsform synthetisiert.

Weitere vorteilhafte Weiterbildungen und Ausgestaltungen der Erfindung sind in den Unteransprüchen angegeben.

Nachfolgend wird die Erfindung unter Bezugnahme auf ein Ausführungsbeispiel anhand der Zeichnung erläutert; in dieser zeigt:

Fig. 1     eine Wandlerschaltung mit Limiter gemäß dem Stand der Technik;

Fig. 2     eine erfindungsgemäße Wandlerschaltung mit Limiter;

Fig. 3a     eine Darstellung des Signalverlaufs eines Eingangssignals für die erfindungsgemäße Wandlerschaltung;

Fig. 3b     eine Darstellung des Signalverlaufs eines von dem Limiter ausgegebenen zeitkontinuierlichen, wertediskreten Signals;

Fig. 3c     eine Darstellung des Signalverlaufs eines von dem Zähler ausgegebenen digitalen Zählsignals;

Fig. 4     eine Darstellung des Signalverlaufs eines von der er findungsgemäßen Wandlerschaltung ausgegebenen werteund zeitdiskreten Verarbeitungssignals;

Fig. 5     ein Schaltbild der in Fig. 2 dargestellten PulsSynthesestufe; und

Fig. 6     ein Schaltbild eines Funkempfängers mit einer Limiter-Empfängerstruktur.

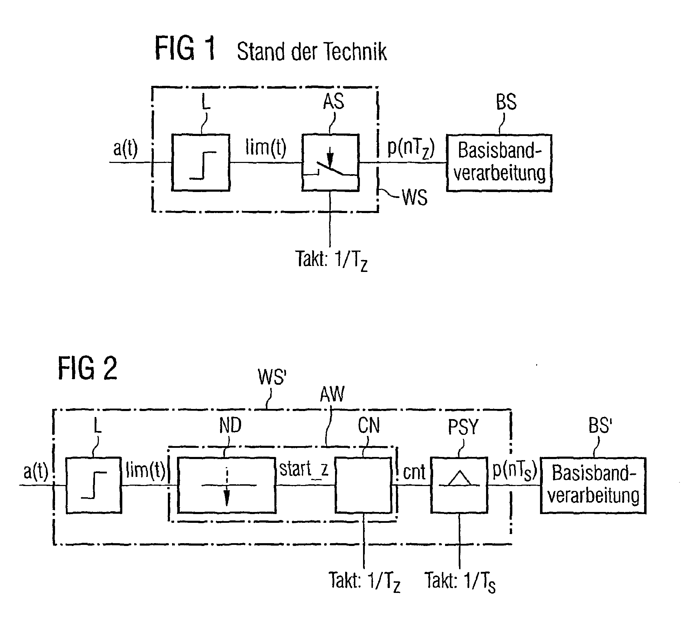

Fig. 1 zeigt eine Wandlerschaltung WS zur Analog-Digital-Wandlung von frequenz- oder phasenmodulierten Signalen in einer Limiter-Empfängerstruktur nach dem Stand der Technik. Die Wandlerschaltung WS umfasst einen Limiter L, dessen Ausgang mit dem Eingang einer Abtaststufe AS verbunden ist. Die Abtaststufe AS wird mit einer Abtastfrequenz $T_Z^{-1}$ betrieben. Das Ausgangssignal der Abtaststufe AS wird einer Basisband-Verarbeitungsschaltung BS zugeführt, welche eine Filterung und Signaldemodulation durchführt.

Die Funktionsweise der in Fig. 1 dargestellten Schaltung ist wie folgt:

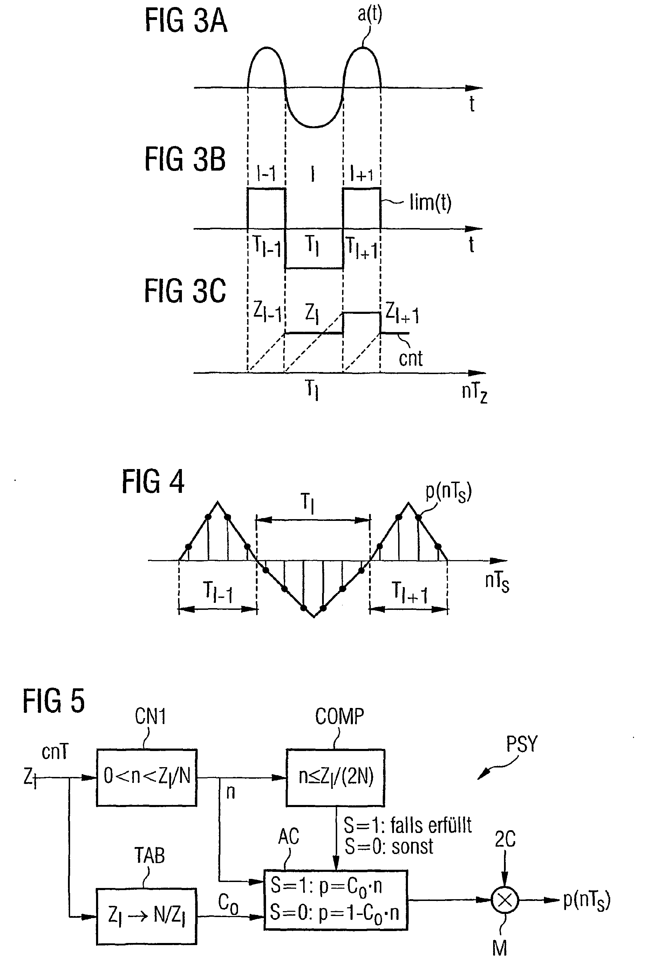

Der Limiter L führt eine Schwellenwertentscheidung des analogen Empfangssignals a(t) durch. Ein Abschnitt des zeitlichen Verlaufs des analogen Empfangssignals a(t) ist in Fig. 3a dargestellt. Das analoge Empfangssignal a(t) ist ein Sinussignal, das aufgrund der Frequenz- bzw. Phasenmodulation eine variierende Periodenlänge aufweist. Wird senderseitig z.B. ein 2-wertiges (binäres) Modulationsalphabet eingesetzt, weist das modulierte Empfangssignal a(t) zwei verschiedene Periodenlängen auf.

Der Limiter L nimmt eine Schwellenwertentscheidung vor. Das Ausgangssignal lim(t) des Limiters L ist folgendermaßen bestimmt:

$$lim(t) = -1 \quad falls \ a(t) < 0$$

$$lim(t) = +1 \quad falls \ a(t) > 0.$$

Das aus einer Folge von Rechteckpulsen bestehende Ausgangssignal lim(t) des Limiters L wird von der Abtaststufe AS mit einer Abtastrate $T_z^{-1}$ abgetastet. Die Abtastzeit $T_z$ bestimmt die Zeitauflösung für die Bestimmung der Nulldurchgänge von lim(t). Aufgrund der schlechten Spektraleigenschaften von Rechteckpulsen muss $T_z^{-1}$ wesentlich größer als die Bandbreite B des Signals a(t) sein.

Das von der Abtaststufe AS ausgegebene Digitalsignal wird mit $p(nT_z)$ bezeichnet. Dabei gibt $nT_z$ die diskrete Zeit in Einheiten n der Abtastzeitdauer $T_z$ an. Das Digitalsignal $p(nT_z)$ wird der Basisband-Verarbeitungsschaltung BS zugleitet, in welcher, wie im Stand der Technik bekannt, die höheren harmonischen Anteile des Signals durch Filterung beseitigt werden und ein demoduliertes Signal erzeugt wird.

Fig. 2 zeigt eine Limiter-Empfängerstruktur mit einer erfindungsgemäßen Wandlerschaltung WS'.

Die Wandlerschaltung WS' weist einen Limiter L, einen dem Limiter L nachgeschalteten Nulldurchgangsdetektor ND, einen dem Nulldurchgangsdetektor ND nachgeschalteten Zähler CN und eine dem Zähler CN nachgeschaltete Puls-Synthesestufe PSY auf. Der Ausgang der Puls-Synthesestufe PSY ist einer Basisband-Verarbeitungsschaltung BS' zugeleitet. Der Nulldurchgangsdetektor ND und der Zähler CN bilden eine Auswerteschaltung AW.

Der Limiter L ist in Aufbau und Funktionsweise identisch mit dem anhand Fig. 1 beschriebenen Limiter L. Das von dem Limiter L ausgegebene Signal lim(t) ist in Fig. 3b dargestellt. Die Dauer der Rechteckpulse entspricht den jeweiligen Nulldurchgangsabständen $T_{l-1}$, $T_l$, $T_{l+1}$ des Empfangssignals a(t). In dem Nulldurchgangsdetektor ND werden die Nulldurchgänge des zeitkontinuierlichen, wertediskreten Ausgangssignals lim(t) des Limiters L ermittelt. Wird ein Nulldurchgang erkannt, so gibt der Nulldurchgangsdetektor ND ein Signal start_z aus. Dieses Nulldurchgangssignal start_z startet den Zähler CN jeweils neu. Der Zähler CN wird mit der Taktfrequenz $T_z^{-1}$ betrieben. Jeweils bei der nächsten Aktivierung durch das Signal start_z liegt das aktuelle Zählergebnis $Z_1$ (korrespondierend zum Nulldurchgangsabstand $T_1$) am Ausgang des Zählers CN bis zum Ende der aktuellen Zählperiode an. Das Ausgangssignal cnt des Zählers CN sowie der aktuelle interne Zählerstand (gestrichelte Linie) ist in Fig. 3c dargestellt. Die Zeitgranularität, die zur Messung der Nulldurchgangs-Zeitabstände benötigt wird, ist $T_z$ und liegt in der gleichen Größenordnung wie die Abtastfrequenz $T_z$ der in Fig. 1 gezeigten Schaltung zum Stand der Technik.

Wie aus den Figuren 3a bis 3c ersichtlich, entspricht die Höhe der (maximalen) Zählwerte $Z_{l-1}$, $Z_l$, $Z_{l+1}$ den Zeitdauern $T_{l-1}$, $T_l$, $T_{l+1}$ der durch Nulldurchgänge definierten Zeitinvervallen l-1, l und l+1.

Basierend auf diesen mit der Zeitgranularität $T_z$ ermittelten Nulldurchgangs-Zeitabständen $T_{l-1}$, $T_l$, $T_{l+1}$ erzeugt die Puls-Synthesestufe PSY ein digitales Verarbeitungssignal $p(nT_s)$ aus einem Basispuls. Beispielsweise kann wie in Fig. 4 dargestellt ein Dreieckpuls als Basispuls verwendet werden. Die Erzeugung des digitalen Verarbeitungssignals $p(nT_s)$ kann mittels eines Interpolators erfolgen, welcher in Abhängigkeit von den vom Zähler CN in der Form der Zählwerte $Z_{l-1}$, $Z_l$, $Z_{l+1}$ ausgegebenen Nulldurchgangs-Zeitabständen $T_{l-1}$, $T_l$, $T_{l+1}$, das Verarbeitungssignal an den durch eine Zeitbasis $T_s$ bestimmten Stützstellen unter Verwendung von Dreieckpulsen berechnet. Die Zeitbasis $T_s$, bezüglich welcher das digitale Verarbeitungssignal $p(nT_s)$ erzeugt wird, kann prinzipiell beliebig gewählt werden, wobei aufgrund der Anforderungen durch die nachfolgende Signalverarbeitung sowie aufgrund signaltheoretischer Erfordernisse (Erfüllung des Abtasttheorems) eine gewisse minimale Zeitauflösung (maximale Abtastzeitdauer $T_s$) gewährleistet sein muss.

Es wird darauf hingewiesen, dass die Zeitauflösung $T_s$ nun nicht mehr von den Genauigkeitsanforderungen der Nulldurchgänge bestimmt wird, sondern von den Spektraleigenschaften des zur Synthese des digitalen Verarbeitungssignals $p(nT_s)$ verwendeten Pulses sowie der nachfolgenden Basisband-Signalverarbeitung in der Basisband-Verarbeitungsstufe BS' abhängt. Dies erlaubt es, nach der Bestimmung der Nulldurchgänge mit der Zeitgenauigkeit $T_z$ die Basisband-Verarbeitung in der Basisband-Verarbeitungsstufe BS' auf einer wesentlich niedrigeren Rate $T_s^{-1}$ vorzunehmen. Damit sinken die Anforderungen an die Komplexität der Basisband-Verarbeitungsstufe BS'.

Es wird ferner darauf hingewiesen, dass bereits die Erzeugung des zeitdiskreten Verarbeitungssignals $p(nT_S)$ mit der niedrigen Verarbeitungsrate $T_S$ erfolgt. D.h., die einzelnen Basispulse werden nicht mit einer hohen Abtastrate (z.B. $T_z^{-1}$) erzeugt und dann dezimiert, sondern sie werden mittels Interpolation direkt auf der minimal notwendigen Zeitbasis $T_S$ berechnet. Denn die Puls-Synthesestufe PSY übernimmt die Zählwerte $Z_{l-1}$, $Z_l$, $Z_{l+1}$ des Ausgangssignals cnt des Zählers CN mit ihrem eigenen (langsamen) Takt $T_S$. Daher kann auch die Puls-Synthesestufe PSY mit sehr geringem Aufwand implementiert werden.

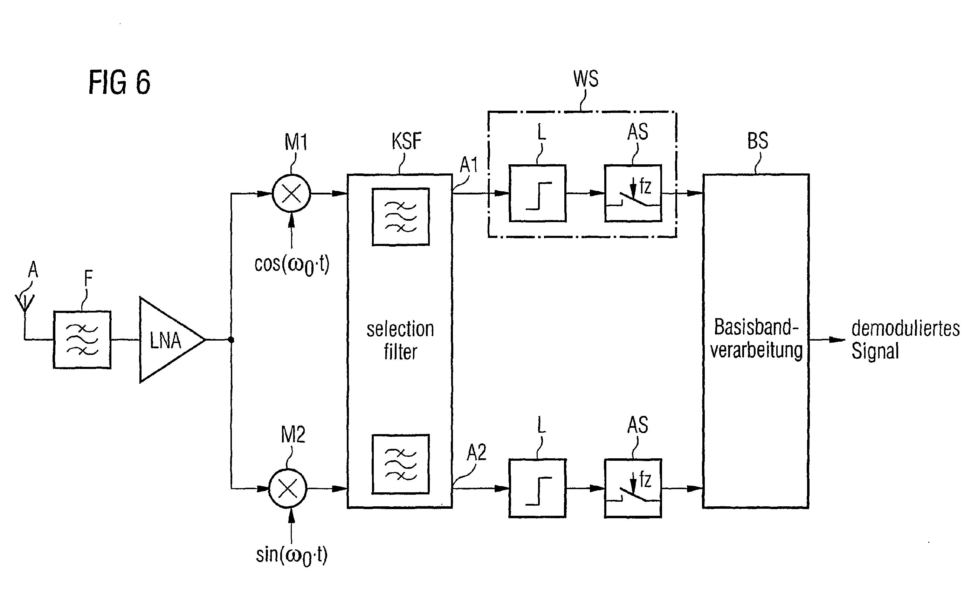

Fig. 5 zeigt eine aufwandsgünstige Implementierung der Puls-Synthesestufe PSY zur Erzeugung von Dreieckpulsen mit einheitlicher Maximalhöhe C. Die Puls-Synthesestufe PSY umfasst einen Zähler CN1, einen dem Zähler nachgeschalteten Vergleicher COMP, einen Tabellenspeicher TAB, einen Akkumulator AC und einen Multiplizierer M.

Es wird angenommen, dass der Zählwert $Z_1$ als ganzzahliges Vielfaches der Abtastzeit $T_S$ vorliegt. Das ganzzahlige Vielfache N ist durch die Gleichung $N = T_S/T_Z$ definiert. Dann ergibt sich für die Ausgangswerte $p(nT_S)$ des Dreieckpulses folgende Beziehung:

$$p(nT_s) \;=\; \begin{cases} 2C \cdot n \cdot N / Z_1 & \text{für} \quad 0 < n < Z_1 / (2N) \\ 2C - 2C \cdot n \cdot N / Z_1 & \text{für } Z_1 / (2N) < n < Z_1 / N) \end{cases}$$

Der Zähler CN1 erzeugt den die diskrete Zeit darstellenden Wert n. Der Vergleicher COMP überprüft, ob $n < Z_1/(2N)$, d.h. ob zur Erzeugung der Signalwerte der obere oder der untere Ausdruck der vorstehend angegebenen Gleichung verwendet werden muss. Der Vergleicher COMP gibt ein Steuersignal S aus, das den Wert S = 1 aufweist, falls die Ungleichung $n < Z_1/ (2N)$ erfüllt ist. Andernfalls gilt S = 0.

Der Faktor $N/Z_1$ wird mit $C_0$ bezeichnet. Da nur endlich viele Faktoren $N/Z_1$ existieren, können diese im Voraus berechnet und in dem Tabellenspeicher TAB abgespeichert werden. Der aktuell benötigte Wert $C_0$ wird in Abhängigkeit von dem Zählergebnis $Z_1$ aus dem Tabellenspeicher TAB ausgelesen und dem Akkumulator AC zugeleitet. Der Akkumulator AC berechnet im Systemtakt $T_S^{-1}$ der Puls-Synthesestufe PSY für S = 1 den Ausdruck $p = C_0.n$ bzw. für S = 0 den Ausdruck $p = 1-C_0 \cdot n$. Damit ist die Pulsform mit der richtigen Pulslänge erzeugt. Die Maximalamplitude C des Dreieckpulses wird durch Multiplikation mit dem Faktor 2C bestimmt. Die Multiplikation wird durch den Multiplizierer M durchgeführt. C kann entsprechend den Anforderungen der nachfolgenden Einheiten (Basisbandverarbeitung BS') gewählt werden.

Fig. 6 zeigt in beispielhafter Weise den Aufbau einer Empfängerschaltung nach dem Limiter-Diskriminatorprinzip, wie sie beispielsweise aus der deutschen Patentanmeldung DE 101 03 479 A1 bekannt ist. Die in Fig. 6 gezeigte bekannte Wandlerschaltung WS entspricht der in Fig. 1 dargestellten Wandlerschaltung WS.

Gemäß Fig. 6 wird ein Funksignal von einer Antenne A aufgefangen und über ein Eingangsfilter F einem rauscharmen Eingangsverstärker LNA (Low Noise Amplifier) zugeführt. Der Eingangsverstärker LNA verstärkt das hochfrequente Antennensignal mit einer einstellbaren Verstärkung. Nach der rauscharmen Verstärkung erfolgt eine Umsetzung des verstärkten Signals auf eine Zwischenfrequenz. Zu diesem Zweck wird das Ausgangssignal des rauscharmen Verstärkers LNA zwei Mischern M1 und M2 zugeführt. Die Mischer M1 und M2 werden in bekannter Weise unter einem Phasenversatz von 90° mit einer Mischfrequenz betrieben, welche von einem lokalen Oszillator (nicht dargestellt) abgeleitet ist. Die beiden zum Betreiben der Mischer M1 und M2 verwendeten Signale entsprechen in ihrer Zeitabhängigkeit $\cos(\omega_0 t)$ bzw. $\sin(\omega_0 t)$, wobei $\omega_0$ die der Oszillatorfrequenz zugeordnete Kreisfrequenz und t die Zeit bezeichnen.

An den Ausgängen der Mischer M1 bzw. M2 stehen Inphase-(I-) und Quadratur-(Q-)Signale in der Zwischenfrequenz bereit.

Die Ausgänge der beiden Mischer M1 und M2 werden einem I-bzw. einem Q-Signaleingang eines analogen, zur Spiegelfrequenz-Unterdrückung dienenden Kanalselektionsfilters KSF zugeführt. Mittels des Kanalselektionsfilters KSF wird ein bestimmter Frequenzkanal ausgewählt und dadurch das gewünschte Nutzsignal aus dem eingangsseitig anliegenden, breitbandigen Signal-Störungssignal-Gemisch herausgefiltert.

An zwei Ausgängen A1, A2 des Kanalselektionsfilters KSF werden die beiden I- und Q-Signalkomponenten mit der Bandbreite des Nutzkanals ausgegeben.

Bei einer erfindungsgemäßen Empfängerschaltung auf der Basis des Limiter-Diskriminator-Prinzips wird die bekannte Wandlerschaltung WS durch die in Fig. 2 dargestellte erfindungsgemäße Wandlerschaltung WS' ersetzt. Ferner wird die vereinfachte Basisband-Verarbeitungsschaltung BS' anstelle von BS (in Fig. 6 zweikanalig dargestellt) verwendet. Das analoge Empfangssignal a(t) entspricht somit der I-Signalkomponente bzw. der Q-Signalkomponente an den Ausgängen A1 bzw. A2.

Zur Basisband-Verarbeitung/Demodulation kann beispielsweise der in der Schrift DE 101 03 479 A1 beschriebene Algorithmus eingesetzt werden.

## Patentansprüche

**1.** Wandlerschaltung zur Verarbeitung eines analogen, frequenz- oder phasenmodulierten Empfangssignals für eine Limiter-Empfängerstruktur, mit

    - einem Limiter (L), welcher das analoge Empfangssignal (a(t)) in ein zeitkontinuierliches, wertediskretes Limiter-Signal (lim(t)) bestehend aus einer Folge von Rechteckpulsen umsetzt,

- einer dem Limiter (L) nachgeschalteten Auswerteschaltung (AW; ND, CN), welche die zeitlichen Abstände ($T_{1-1}$, $T_1$, $T_{1+1}$) zwischen jeweils zwei aufeinanderfolgenden Nulldurchgängen des Limiter-Signals (lim(t)) erfasst und ein Nulldurchgangs-Abstandssignal (cnt; $Z_{1-1}$, $Z_1$, $Z_{1+1}$) ausgibt, **gekennzeichnet durch**

eine Signalsynthese-Schaltung (PSY), welche das Nulldurchgangs-Abstandssignal (cnt; $Z_{I-1}$, $Z_I$, $Z_{I+1}$) entgegennimmt und in Abhängigkeit von diesem ein werte- und zeitdiskretes verarbeitungssignal (p ($nT_S$)) erzeugt, dessen Nulldurchgänge den Nulldurchgängen des Limiter-Signals (lim(t)) entsprechen und dessen für die Signalsynthese eingesetze Pulsform eine geringere Spektralbreite als ein Rechteckpuls entsprechender Breite aufweist.

2. Wandlerschaltung nach Anspruch 1,
   **dadurch gekennzeichnet,**
   **dass** die Signalsynthese-Schaltung (PSY) als Pulsform einen Dreieckpuls verwendet.

3. Wandlerschaltung nach Anspruch 1 oder 2,
   **dadurch gekennzeichnet,**

   - **dass** die Auswerteschaltung (AW; ND, CN) die zeitlichen Abstände ($T_{I-1}$, $T_I$ $T_{I+1}$) zwischen jeweils zwei aufeinanderfolgenden Nulldurchgängen des Limiter-Signals (lim(t)) mit einer Zeitgenauigkeit $T_Z$ erfasst, und
   - **dass** das Verarbeitungssignal (p($nT_S$)) eine Abtastrate $T_S^{-1}$ aufweist, die kleiner als $T_Z^{-1}$ ist.

4. Wandlerschaltung nach einem der vorhergehenden Ansprüche,
   **dadurch gekennzeichnet,**
   **dass** die Auswerteschaltung (AW; ND, CN) einen Nulldurchgangsdetektor (ND) und einen dem Nulldurchgangsdetektor (ND) nachgeordneten Zähler (CN) umfasst.

5. Wandlerschaltung nach den Ansprüchen 3 und 4,
   **dadurch gekennzeichnet,**
   **dass** die Signalsynthese-Schaltung (PSY) einen Interpolator aufweist, welcher in Abhängigkeit von dem Nulldurchgangs-Abstandssignal (cnt; $Z_{I-1}$, $Z_I$, $Z_{I+1}$) das Verarbeitungssignal (p($nT_S$)) an den durch die Abtastrate $T_S^{-1}$ bestimmten Stützstellen unter Verwendung der vorgegebenen Pulsform synthetisiert.

6. Verfahren zur Wandlung eines analogen, frequenz- oder phasenmodulierten Empfangssignals in einer Limiter-Empfängerstruktur, mit den Schritten:

   - Erzeugen eines limitierten, zeitkontinuierlichen, wertediskreten Limiter-Signals (lim(t)) bestehend aus einer Folge von Rechteckpulsen aus einem analogen Empfangssignal (a (t)) ;
   - Ermitteln der zeitlichen Abstände ($T_{1-1}$, $T_1$, $T_{1+1}$) zwischen jeweils zwei aufeinanderfolgenden Nulldurchgängen des Limiter-Signals (lim(t)) ; **gekennzeichnet durch** das Synthetisieren eines werte- und zeitdiskreten Verarbeitungssignals (p($nT_s$)) in Abhängigkeit von den ermittelten zeitlichen Abständen ($T_{1-1}$, $T_1$, $T_{1+1}$) zwischen aufeinanderfolgenden Nulldurchgängen des Limiter-Signals (lim(t)), dessen Nulldurchgänge den Nulldurchgängen des Limiter-Signals (lim(t)) entsprechen und dessen für die Signalsynthese eingesetze Pulsform eine geringere Spektralbreite als ein Rechteckpuls entsprechender Breite aufweist.

7. Verfahren nach Anspruch 6,
   **dadurch gekennzeichnet,**
   **dass** als Pulsform ein Dreieckpuls verwendet wird.

8. Verfahren nach Anspruch 6 oder 7,
   **dadurch gekennzeichnet,**

   - **dass** die zeitlichen Abstände ($T_{I-1}$, $T_I$, $T_{I+1}$) zwischen jeweils zwei aufeinanderfolgenden Nulldurchgängen des Limiter-Signals (lim(t)) mit einer Zeitgenauigkeit $T_Z$ ermittel werden, und
   - **dass** das Verarbeitungssignal (p($nT_S$)) mit einer Abtastrate $T_S^{-1}$ synthetisiert wird, die kleiner als $T_Z^{-1}$ ist.

9. Verfahren nach Anspruch 8,
   **dadurch gekennzeichnet,**
   **dass** zum Ermitteln des zeitlichen Abstands zwischen zwei aufeinanderfolgenden Nulldurchgängen des Limiter-Signals (lim(t))

- die Nulldurchgänge des Limiter-Signals (lim(t)) detektiert werden;
- mittels eines mit dem Zähltakt $T_z^{-1}$ getakteten Zählers (CN) der zeitliche Abstand zwischen zwei benachbarten Nulldurchgängen bestimmt wird.

**10.** Verfahren nach einem der Ansprüche 6 bis 9,
**dadurch gekennzeichnet,**
**dass** das werte- und zeitdiskrete Verarbeitungssignal (p(nT$_S$)) in Abhängigkeit von den zeitlichen Abständen zwischen zwei Nulldurchgängen durch eine Interpolation der vorgegebenen Pulsform an den durch die Abtastrate $T_S^{-1}$ bestimmten Stützstellen berechnet wird.

**Claims**

**1.** Converter circuit for processing an analogue, frequency- or phase-modulated reception signal for a limiter receiver structure, having

- a limiter (L), which converts the analogue reception signal (a(t)) into a time-continuous, value-discrete limiter signal (lim(t)) comprising a sequence of rectangular pulses,
- an evaluation circuit (AW; ND, CN) connected downstream of the limiter (L), which evaluation circuit detects the temporal distances ($T_{1-1}$, $T_1$, $T_{1+1}$) between in each case two successive zero crossings of the limiter signal (lim(t)) and outputs a zero crossing distance signal (cnt; $Z_{l-1}$, $Z_l$, $Z_{l+1}$), **characterized by** a signal synthesis circuit (PSY), which receives the zero cross distance signal (cnt; $Z_{1-1}$, $Z_1$, $Z_{1+1}$) and, in a manner dependent on the latter, generates a value- and time-discrete processing signal (p(nT$_S$)) whose zero crossings correspond to the zero crossings of the limiter signal (lim(t)) and whose pulse shape used for the signal synthesis has a smaller spectral width than a rectangular pulse of corresponding width.

**2.** Converter circuit according to Claim 1,
**characterized**
**in that** the signal synthesis circuit (PSY) uses a triangular pulse as pulse shape.

**3.** Converter circuit according to Claim 1 or 2,
**characterized**

- **in that** the evaluation circuit (AW; ND, CN) detects the temporal distances ($T_{1-1}$, $T_1$, $T_{1+1}$) between in each case two successive zero crossings of the limiter signal (lim(t)) with a time accuracy $T_z$, and
- **in that** the processing signal (p(nT$_s$)) has a sampling rate $T_s^{-1}$ that is less than $T_z^{-1}$.

**4.** Converter circuit according to one of the preceding claims,
**characterized**
**in that** the evaluation circuit (AW; ND, CN) comprises a zero crossing detector (ND) and a counter (CN) arranged downstream of the zero crossing detector (ND).

**5.** Converter circuit according to Claims 3 and 4,
**characterized**
**in that** the signal synthesis circuit (PSY) has an interpolator which, in a manner dependent on the zero crossing distance signal (cnt; $Z_{1-1}$, $Z_1$, $Z_{1+1}$) synthetizes the processing signal (p(nT$_S$)) at the support points determined by the sampling rate $T_S^{-1}$ using the predetermined pulse shape.

**6.** Method for converting an analogue, frequency- or phase-modulated reception signal in a limiter receiver structure, having the steps of:

- generating a limited, time-continuous, value-discrete limiter signal (lim(t)) comprising a sequence of rectangular pulses from an analogue reception signal (a(t));
- determining the temporal distances ($T_{1-1}$, $T_1$, $T_{1+1}$) between in each case two successive zero crossings of the limiter signal (lim(t)); **characterized by** synthetizing a value- and time-discrete processing signal (p(nT$_S$)) in a manner dependent on the temporal distances ($T_{1-1}$, $T_1$, $T_{1+1}$) determined between successive zero crossings of the limiter signal (lim(t)) whose zero crossings correspond to the zero crossings of the limiter signal (lim(t)) and whose pulse shape used for the signal synthesis has a smaller spectral width than a rectangular pulse of corresponding width.

7. Method according to Claim 6,
   **characterized**
   **in that** a triangular pulse is used as pulse shape.

8. Method according to Claim 6 or 7,
   **characterized**

   - **in that** the temporal distances ($T_{1-1}$, $T_1$, $T_{1+1}$) between in each case two successive zero crossings of the limiter signal (lim(t)) are determined with a time accuracy $T_z$, and
   - **in that** the processing signal (p ($nT_S$)) is synthetized with a sampling rate $T_S^{-1}$ that is less than $T_Z^{-1}$.

9. Method according to Claim 8,
   **characterized**

   - **in that**, in order to determine the temporal distance between two successive zero crossings of the limiter signal (lim(t)),
   - the zero crossings of the limiter signal (lim (t)) are detected;
   - the temporal distance between two adjacent zero crossings is determined by means of a counter (CN) clocked with the counting clock $T_z^{-1}$.

10. Method according to one of Claims 6 to 9,
    **characterized**
    **in that** the value-and time-discrete processing signal ($p(nT_s)$) is calculated in a manner dependent on the temporal distances between two zero crossings by an interpolation of the predetermined pulse shape at the support points determined by the sampling rate $T_S^{-1}$.

## Revendications

1. Circuit de convertisseur pour traiter un signal de réception analogique, modulé en fréquence ou modulé en phase pour une structure de limiteur-récepteur, comprenant

   - un limiteur (L) qui transforme le signal (a(t)) de réception analogique en un signal (lim(t)) de limiteur continu dans le temps et à valeur discrète constitué d'un train d'impulsions rectangulaires,
   - un circuit (AW ; ND ; CN) d'exploitation, qui est monté en aval du limiteur (L), qui relève les intervalles ($T_{1-}1$, $T_1$, $T_{1+1}$) de temps entre respectivement deux passages par zéro successifs du signal (lim(t))de limiteur et qui émet un signal (cnt ; $Z_{1-1}$, $Z_1$, $Z_{1+1}$) d'intervalle de passage par zéro, **caractérisé par** un circuit (PSY) de synthèse du signal, qui reçoit le signal (cnt ; $Z_{1-1}$, $Z_1$, $Z_{1+1}$) d'intervalle de passage par zéro et qui produit en fonction de celui-ci un signal (p(nTs)) de traitement discret en valeur et discret dans le temps, dont les passages par zéro correspondent aux passages par zéro du signal (lim(t)) de limiteur et dont la forme d'impulsion utilisée pour la synthèse du signal a une largeur spectrale plus petite qu'une largeur correspondant à une impulsion rectangulaire.

2. Circuit de convertisseur suivant la revendication 1,
   **caractérisé**
   **en ce que** le circuit (PSY) de synthèse du signal utilise une impulsion triangulaire comme forme d'impulsion.

3. Circuit de convertisseur suivant la revendication 1 ou 2,
   **caractérisé**

   - **en ce que** le circuit (AW ; ND ; CN) d'exploitation relève les intervalles ($T_{1-1}$, $T_1$, $T_{1+1}$) temporels entre respectivement deux passages par zéro successifs du signal (lim(t)) de limiteur avec une précision $T_z$ dans le temps et
   - **en ce que** le signal (p(nTs)) de traitement a un taux $T_S^{-1}$ d'échantillonnage qui est plus petit que $T_Z^{-1}$.

4. Circuit de convertisseur suivant l'une des revendications précédentes,

**caractérisé**

**en ce que** le circuit (AW ; ND ; CN) d'exploitation comprend un détecteur (ND) de passage par zéro et un compteur (CN) disposé en aval du détecteur (ND) de passage par zéro.

5. Circuit de convertisseur suivant les revendications 3 et 4,
   **caractérisé**
   **en ce que** le circuit (PSY) de synthèse du signal a un interpolateur qui en utilisant la forme d'impulsion prescrite, synthétise, en fonction du signal (cnt ; $Z_{1-1}$, $Z_1$, $Z_{1+1}$) d'intervalle de passage par zéro, le signal (p(nTs)) de traitement aux points déterminés par le taux $T_S^{-1}$ d'échantillonnage.

6. Procédé de conversion d'un signal de réception analogique modulé en fréquence ou en phase dans une structure de limiteur-récepteur, comprenant les stades dans lesquels :

   - on produit un signal (lim(t)) qui transforme le signal (a(t)) de réception analogique en un signal (lim(t)) de limiteur continu dans le temps et à valeur discrète constitué d'un train d'impulsions rectangulaires à partir d'un signal (a(t)) de réception analogique,
   - on détermine les intervalles ($T_{1-1}$, $T_1$, $T_{1+1}$) temporels entre respectivement deux passages par zéro successifs du signal (lim(t)) de limiteur, **caractérisé par** la synthèse d'un signal (p(nTs)) de traitement discret en valeur et en temps en fonction des intervalles ($T_{1-1}$, $T_1$, $T_{1+1}$) temporels déterminés entre deux passages par zéro successifs du signal (lim(t)) de limiteur, dont les passages à par zéro correspondent aux passages par zéro du signal (lim(t)) de limiteur, et dont la forme d'impulsion utilisée pour la synthèse du signal a une largeur spectrale plus petite qu'une largeur correspondant à une impulsion rectangulaire.

7. Procédé suivant la revendication 6,
   **caractérisé**
   **en ce que** l'on utilise une impulsion triangulaire comme forme d'impulsion.

8. Procédé suivant la revendication 6 ou 7,
   **caractérisé**

   - **en ce que** l'on détermine les intervalles ($T_{1-1}$, $T_1$, $T_{1+1}$) temporels entre deux passages par zéro successifs du signal (lim(t)) limiteur avec une précision $T_Z$ dans le temps et
   - **en ce que** l'on synthétise le signal (p(nTs)) de traitement avec un taux $T_S^{-1}$ d'échantillonnage qui est plus petit que $T_Z-1$.

9. Procédé suivant la revendication 8,
   **caractérisé**
   **en ce que** pour déterminer l'intervalle temporel entre deux passages par zéro successifs du signal (lim(t)) de limiteur

   - on détecte les passages par zéro du signal (lim(t)) de limiteur ;
   - on détermine au moyen d'un compteur (CN) cadencé par la cadence $T_Z^{-1}$ de comptage l'intervalle temporel entre deux passages par zéro voisins.

10. Procédé suivant l'une des revendications 6 à 9,
    **caractérisé**
    **en ce que** l'on calcule le signal (p(nTs)) de traitement discret en valeur et en temps en fonction des intervalles temporels entre deux passages par zéro par une interpolation de la forme d'impulsion prescrite sur les points déterminés par le taux $T_S^{-1}$ d'échantillonnage.

# FIG 1 Stand der Technik

a(t) — L — lim(t) — AS — p(nT$_Z$) — BS Basisband-verarbeitung

WS

Takt: 1/T$_Z$

# FIG 2

WS'   AW

a(t) — L — lim(t) — ND — start_z — CN — cnt — PSY — p(nT$_S$) — BS' Basisband-verarbeitung

Takt: 1/T$_Z$   Takt: 1/T$_S$

## FIG 3A

a(t)

t

## FIG 3B

I-1 | I | I+1

lim(t)

$T_{I-1}$ | $T_I$ | $T_{I+1}$

t

## FIG 3C

$Z_{I-1}$ | $Z_I$ | $Z_{I+1}$

cnt

$T_I$

$nT_Z$

## FIG 4

$T_I$

$p(nT_S)$

$T_{I-1}$ | | $T_{I+1}$

$nT_S$

## FIG 5

CN1

COMP

PSY

cnT

$Z_I$ → $0 < n < Z_I/N$ → n → $n \leq Z_I/(2N)$

S=1: falls erfüllt
S=0: sonst

TAB

AC

2C

$Z_I \rightarrow N/Z_I$ → $C_0$

S=1: $p = C_0 \cdot n$
S=0: $p = 1 - C_0 \cdot n$

→ ⊗ → $p(nT_S)$

M

# FIG 6

EP 1 584 170 B1